# EUROPÄISCHE PATENTANMELDUNG

(11) **EP 2 696 329 A1**
(43) Veröffentlichungstag der Anmeldung: **12.02.2014**
(21) Anmeldenummer: 12180013.0
(22) Anmeldetag: 10.08.2012
(51) Int. Cl.: G07B 15/00, G07B 15/02, G06Q 10/00

(54) **Verfahren und System zur Lokalisierung eines e-Tickets in einem Verkehrsmittel**

(71) Anmelder: Siemens Schweiz AG, 8047 Zürich (CH); Siemens Aktiengesellschaft, 80333 München (DE)
(72) Erfinder: Kalbermatter, Marcel, 3940 Steg (CH); Eberhardt, Uwe, 81539 München (DE); Glänzer, Martin, 81827 München (DE); Roskosch, Richard, 85521 Ottobrunn (DE)
(74) Vertreter: Kley, Hansjörg

(57) **Zusammenfassung**

Zur Erfassung der definierten Anwesenheit eines e-Tickets (100) in einem Verkehrsmittel (30) wird ein Verfahren und System vorgeschlagen, bei dem der relative Ort des e-Tickets (10) bezüglich dem Verkehrsmittel (30) mittels im Verkehrsmittel verteilt angeordneter Funkbaken (110) registriert wird.

## Beschreibung

Die vorliegende Erfindung bezieht sich auf ein Verfahren und ein System zur Lokalisierung eines e-Tickets mittels eines Funkbakens gemäss dem Patentanspruch 1 bzw. Patentanspruch 12.

Die generelle Funktionalität und die Anforderungen an ein e-Ticketing-System in einem Fahrzeug des öffentlichen Verkehrs kann beispielsweise den in [2] und [3] angegebenen Quellen entnommen werden. Elektronische Billette bzw. elektronische Fahrscheine sind auch unter dem Begriff e-Tickets bekannt. Im Folgenden werden die vorgenannten zwei Begriffe kurz unter e-Ticket subsumiert. Ebenso werden Fahrzeuge des OeV - wie auch Kursschiffe - unter dem Begriff (öffentliches) Verkehrsmittel subsumiert.

Es werden im wesentlichen zwei verschiedene Ticketing-Systeme unterschieden:

### CiCo Check-in/Check-Out

Ein Fahrgast hält bewusst beim Betreten und beim Verlassen des Verkehrsmittels bzw. des Bahnsteig-Bereichs sein Billett kurz vor eines der zum Abrechnungssystem gehörenden Lesegeräte, korrekterweise «Sende-/Empfangseinheiten». Die Abfrage des Billetts - im folgenden stets e-Ticket genannt - erfolgt durch eine Nahdistanz-Funkverbindung, wie z.B.
- Proximity, ISO/IEC 14443, Reichweite bis 10cm;
- Vincinity, ISO/IEC 15693, 13.56MHz;
   Reichweite 1 - 1.5m.

### BiBo Be-in/Be Out

Bei komfortableren Systemen ist es nur noch nötig, dass der Fahrgast sein elektronisches Billett auf sich trägt: Das Billett wird per Funk innerhalb der befahrenen Streckenabschnitte automatisch von den in den Wagen installierten Leseeinheiten erfasst und die so gewonnenen Daten einem automatischen Abrechnungssystem zugeführt. Eine Interaktion des Benutzers ist nicht mehr notwendig. Es braucht auch keinen Check-Out-Vorgang. Somit lässt sich der Fahrgastfluss erheblich beschleunigen, insbesondere beim gleichzeitigen Ein-/Aussteigen der Passagiere.

Aus der Schrift EP 1 201 693 B1 [1] ist ein Verfahren und ein System zur Erfassung von elektronischen Billette (e-Ticket) bekannt. Dem in der Schrift [1] offenbarten System liegt folgende Funktionalität zugrunde:
Aus Gründen der Autonomie befinden sich die Billette in einem Schlafzustand. Beim Eintritt in ein Verkehrsmittel werden die E-Tickets durch ein Nahfeld, z.B. 6.78Mhz geweckt und unidirektional mit einer ID sowie einer Timing Information «gestempelt». Die ID bezieht sich auf den im Eingangsbereich befindlichen Wecksender und die Timing Information auf Beginn und Intervall einer bidirektionalen Kommunikation zwischen e-Ticket und einer im Wagen befindlichen Sende- und Empfangseinheit. Durch das Protokoll können bei diesem System Fehlerfassungen und Manipulationen verhindert werden, so z.B.
   - Parallelfahrt auf einem Velo oder durch Parallelfahrt zweier Züge
   - Betrugsversuche durch temporäres Versorgen des E-Tickets in eine metallene Zigarettenschachtel.

Das in EP 1 201 693 B1 [1] offenbarte System erlaubt die Detektion des Aufenthaltes beim Durchwandern eines Zuges mit der Granularität Wagen bzw. der Granularität Sende-/Empfangsbereich der in einem Wagen angeordneten Sende-/Empfangseinheit. Überlappungen sind dabei möglich, ja sogar ausdrücklich erwünscht. Diese Überlappungen haben jedoch die Konsequenz, dass eine Zuordnung des Ortes eines E-Tickets zu einem bestimmten Ort innerhalb eines Verkehrsmittels nicht möglich ist.

Der vorliegenden Erfindung liegt daher die Aufgabe zugrunde, ein Verfahren und System zur Lokalisierung eines e-Tickets anzugeben, das eine genaue Lokalisierung des Ortes des E-Tickets im Verkehrsmittel selber erlaubt, um dadurch eine "aufenthaltssentive" Erfassung zu ermöglichen, beispielsweise eine Zuordnung 1. Klasse/2. Klasse für einen Wagen, der beide Klassen enthält, sei es 1. Klasse und 2. Klasse oder Restaurant und 2. Klasse wie dies z.B. bei den Schweizerischen Verkehrsunternehmungen wie RhB, ZVV, SGV oder SBB üblicherweise vorkommt. Im Sinne dieser Schrift wird die Lokalisierug des Ortes des E-Tickets in einem Verkehrsmittel als relativer Ort bezeichnet, relativ in Bezug auf die Lage innerhalb des betrachteten Verkehrsmittels.

Diese Aufgabe wird durch die in den unabhängigen Patentansprüchen angegebenen Massnahmen gelöst. Vorteilhafte Ausgestaltungen der Erfindung sind in weiteren Ansprüchen angegeben.

So können sich die folgenden Vorteile zusätzlich ergeben:

i) Bei einer Mehrzahl von in einem Verkehrmittel angeordneten Funkbaken kann die Zuverlässigkeit der Angabe des relativen Ortes auch bei Fehlern eindeutig vorgenommen werden, so dass Ansprüche einer Verkehrsunternehmung gegenüber einem Passagier mit grosser Rechtssicherheit durchgesetzt werden können.

ii) Da in einem Verkehrsmittel ohnehin eine Vielzahl von elektrischen Komponenten (wie z.B. Beleuchtungskörper, Bedienelemente für Fensterstoren, Bedienelemente für Leselampen) installiert ist, können die Funkbaken an diese Komponenten montiert werden, so dass der Aufwand für eine Mehrzahl von Funkbaken in einem Wagen drastisch reduziert wird.

iii) Eine dynamischen Vergabe der Identnummern ermöglicht auch einen nachträglichen Einbau von Funkbaken mit geringem Aufwand.

Die Erfindung wird nachfolgend anhand der Zeichnung beispielsweise näher erläutert. Dabei zeigen:

Figur 1 Längsdarstellung der Anordnung von zwei Sende-/Empfangseinheiten in einem Eisenbahnwagen für die Lokalisierung eines E-Tickets mittels Funkbaken;

Figur 2 Detaillierte Ausschnitt aus der Darstellung gemäss der Figur 1;

Figur 3 Blockschaltbild einer Funkbake mit gleichem Frequenzband für das Aufwecken und die Kommunikation;

Figur 4 Blockschaltbild einer Funkbake mit getrennten Frequenzbändern für das Aufwecken und die Kommunikation.

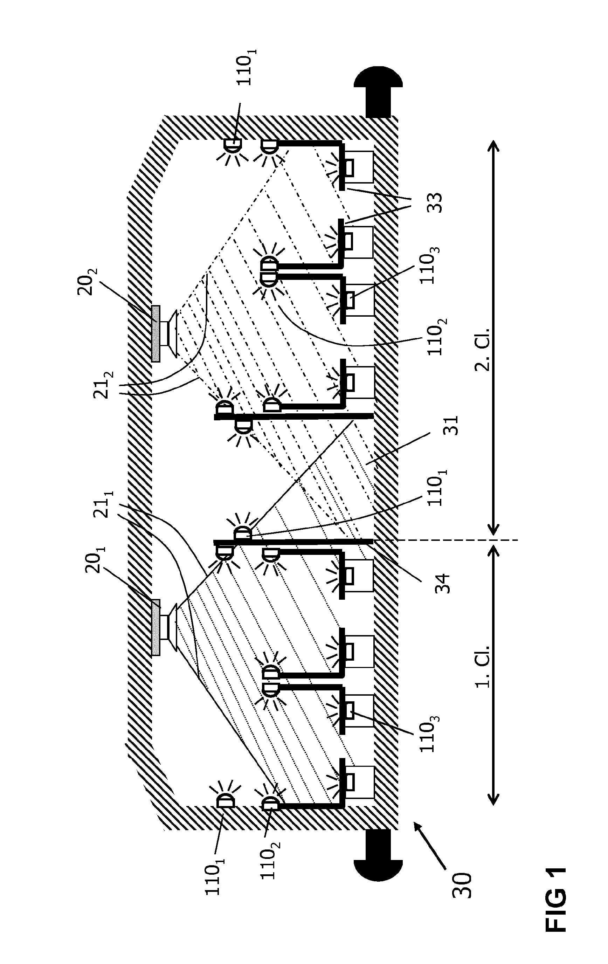

Figur 1 zeigt einen Eisenbahnwagen 30 als Beispiel eines Verkehrsmittels 30. Der Eisenbahnwagen 30 in zwei Abteile 1. Cl. (links) und 2. Cl. (rechts) gegliedert, siehe dazu die Trennwand 34 im Eingangsbereich 31. An der Decke des Eisenbahnwagens 30 sind zwei Sende-/Empfangseinheiten 20₁ und 20₂ installiert. Die Erfassungsbereiche 21₁ und 21₂ der Sende-/Empfangseinheiten 20₁ und 20₂ sind so großzügig bemessen, dass für die meisten möglichen Positionen eines e-Tickets 10 im Eisenbahnwagen 30 eine Kommunikation mit beiden Sende-/Empfangseinheiten 20₁ und 20₂ möglich ist; dies ist wichtig wegen Redundanz.

Im Wagen 30 sind eine Mehrzahl von Funkbaken 110 installiert, im einzelnen:
- Funkbaken 110₁ installiert an einer Wand, sei es im Durchgangsbereich zu einem anderen Wagen oder im Eingangsbereich 31 eines Wagens 30;
- Funkbaken 110₂ installiert in Oberkante von Rückenlehne - nicht unbedingt im zu erwartenden Bereich des Kopfes - eines Fahrgastes;
- Funkbaken 110₃ eingebaut unterhalb der Sitzfläche eines Sitzes 33. Über diese Einbauart können z.B. mit einem als e-Ticket ausgebildeten GA versehene Hunde erfasst werden, weitere Ausführungen zum Protokoll siehe unten.

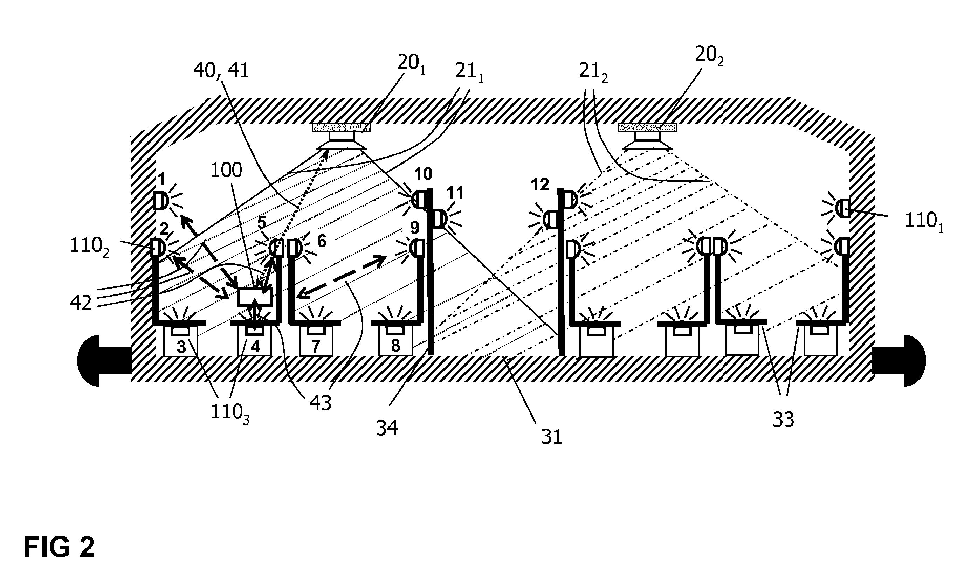

Die weiteren Ausführungen zur vorliegenden Erfindung beziehen sich nun auf die Figur 2. Die vorgenannten Funkbaken 110₁, 110₂, 110₃, sind zur Erläuterung fortlaufend nummeriert mit 1, 2, 3, .. , 12. Ein e-Ticket 100 versucht selbständig, per Funkkommunikation im Rahmen des Erfassungsprozesses Kontakt mit umliegenden Funkbaken 1, 2, 3, ... , 12 aufzunehmen. Die Reichweite der Funkkommunikation ist deutlich geringer ausgestaltet als bei einer Funkkommunikation zwischen e-Ticket 100 und den Sende-/Empfangseinheiten 20₁ und 20₂. Mit der deutlich geringeren Reichweite lassen sich beim Zustandekommen einer Kommunikationsbeziehung zwischen e-Ticket 100 und Funkbake 110 einzelne Bereiche einfach und sicher abgrenzen.

Die Funkbaken 110 haben zur Bereichsabgrenzung nur die Aufgabe, die von den e-Tickets 100 kommenden Anfragen per Funk zu beantworten. Wenn die Funkbaken 110 mit einer Batterie ausgestattet sind, sind prinzipiell keine Installationsleitungen zum Anschluss der einzelnen Funkbaken nötig, was die kostengünstige Installation mehrerer Funkbaken 110 pro Bereich, also z.B. pro Erstklassabteil 1. Cl oder pro 2. Klassabteilung 2. Cl. ermöglicht. Die Zuverlässigkeit bei der Zuordnung zu einzelnen Bereichen lässt sich durch die Kommunikation mit mehreren Funkbaken und ggf. eine Auswertung von Empfangspegeln wesentlich erhöhen.

Zur Unterscheidung hat jede der Funkbaken 110 bei der Installation oder auch bereits bei der Fertigung eine eigene Identnummer erhalten, mit der sie zumindest innerhalb des gleichen Wagens von jeder anderen Funkbake unterschieden werden kann. Die in Figur 2 gezeigte Nummerierung 1, 2, .. , 11, 12 ist stellvertretend für diese Identnummer zu verstehen. Die Identnummern werden vorzugsweise nach einem Nummerierungssystem vergeben und können in entsprechenden Feldern zusätzliche Informationen enthalten, beispielsweise über den Wagen 30, so dass allein aufgrund einer Identnummer festgestellt werden kann, in welchem Wagen sich eine Funkkommunikation mit der entsprechenden Funkbake erfolgte.

Nun steigt ein Fahrgast in den Wagen 30 ein und setzt sich. Beim Betreten des Wagens 30 wird «sein» e-Ticket 100 aktiviert. Der Fahrgast setzt sich auf einen der Sitzplätze, nachdem sich die Türen geschlossen haben. Wenn der Zug abfährt, beginnt die Kommunikation zwischen «seinem» e-Ticket 100 und der im Wagen 30 installierten Infrastruktur-Komponenten.

Im weiteren Verlauf der Kommunikation zur Abrechnung dieser Fahrt ermittelt das e-Ticket 100, in welchem Wagenbereich, z.B. 1. Cl. oder 2. Cl., sich «sein» Fahrgast aufhält: Das e-Ticket 100 versucht, mit möglichen Funkbaken 110 im jeweiligen Bereich Kontakt aufzunehmen. Dies findet beispielsweise dadurch statt, dass das e-Ticket 100 versucht, Funkbaken 110 in seiner Nähe durch ein spezielles Funksignal aus einem Schlafzustand heraus aufzuwecken. Da die Funkbaken 110 im gegebenen Fall batteriebetrieben sind, ist es notwendig, auch hier Mechanismen zur Reduktion des Energiebedarfs vorzusehen. Nach dem Aufweckvorgang und ersten Kommunikationsvorgängen zwischen e-Ticket 110 und den Funkbaken mit den Identnummern 1, 2, 4, 5 und 9 - siehe dazu die Figur 2 - in der Nähe stellt sich die Situation wie folgt dar:

Der Fahrgast (nicht dargestellt in der Figur 2) sitzt auf einem der Sitze 33 mit dem schematisch dargestellten e-Ticket 100 und trägt dieses in seiner Hosentasche. Das e-Ticket 100 konnte eine Funkkommunikation mit den Funkbaken mit den Identnummern 1, 2, 4, 5 und auch 9 aufnehmen. Die Kommunikation mit Funkbake 9 ist nicht beabsichtigt, sondern ergab sich zufällig aufgrund bestimmter Gegebenheiten wie z.B: Überreichweite durch weitere Fahrgäste, die nebenan sitzen und sperrige Taschen bei sich haben. Dessen ungeachtet kann der Bereich, in dem sich der Fahrgast mit «seinem» e-Ticket 100 aufhält, eindeutig zugeordnet werden:
Es ergeben sich Kommunikationspfade mit den 4 Funkbaken 1, 2, 4 und 5 im richtigen Bereich und der Funkbake 9 aus dem angrenzenden Bereich. Zusätzlich findet im e-Ticket 100 noch eine Auswertung der Empfangspegel der von den Funkbaken mit den Identnummern 1, 2, 4, 5 und 9 empfangenen Signale statt, wobei sich ein deutlich niedrigerer Empfangspegel des Signals von Funkbake 9 ergibt. Dieser Umstand untermauert zusätzlich die Zuordnung des e-Tickets und «seinem» Träger zum Sitzbereich - 1. Cl. - ganz links.

Zu den verbleibenden Funkbaken mit den Identnummern 3, 6, 7, 8, 10, 11 und 12 konnte aufgrund der begrenzten Reichweite und äußerer Umstände (durch weitere Fahrgäste belegte Sitzplätze usw.) keine Kommunikation aufgebaut werden; Sie tragen momentan zur Bereichsabgrenzung nicht bei.

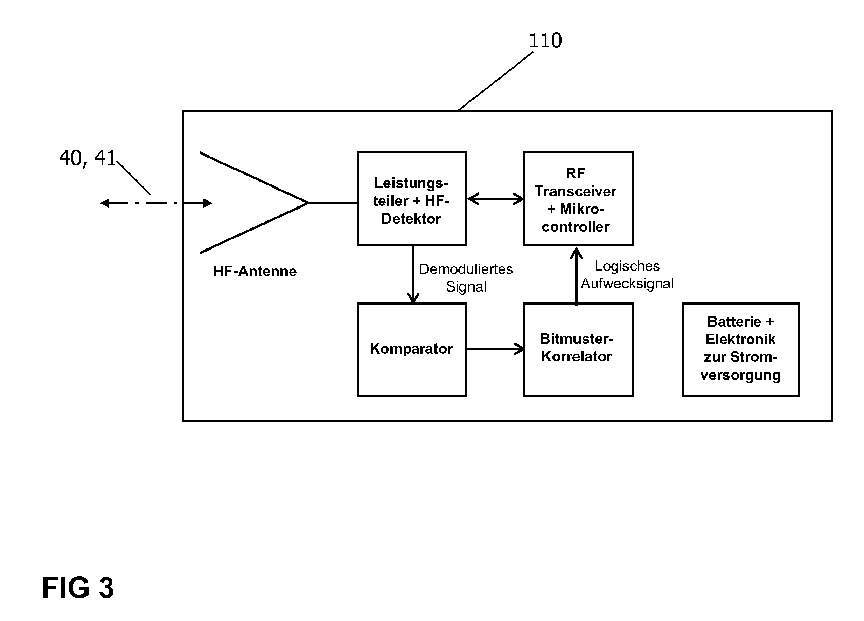

Figur 3 zeigt die schaltungsmässige und funktionale Struktur einer Funkbake 110 mit gleichem Frequenzband für Kommunikation und Aufwecken. Der e-Ticket 100 weckt die Funkbake durch Aussenden eines Wecksignales 41 auf (modulierter Bitstrom, per AM-Modulation im entsprechenden Frequenzband an die Funkbake 110 gesendet). Der HF-Detektor in der Funkbake 110 demoduliert dieses Signal. Das demodulierte Signal wird einem Komparator zugeführt, an dessen Ausgang ein Bitstrom entsteht. Nur bei passendem Bitmuster schaltet der Bitmuster-Korrelator das Aufwecksignal für die Funkbake 110 frei und nur dann wird der steuernde Mikrocontroller in der Funkbake 110 aus dem Schlafzustand aufgeweckt.

Nur HF-Detektor, Komparator und Bitmuster-Korrelator laufen die gesamte Zeit hindurch; der steuernde Mikrocontroller hingegen befindet sich die meiste Zeit im Schlafzustand. Durch das vorgestellte Systemkonzept ergibt sich eine geringe mittlere Stromaufnahme, so dass die Funkbake 110 trotz Batteriebetrieb mehrere Jahre auch ohne Wartung funktionsfähig bleibt.

Die Einbauorte der Funkbaken 110 sind in der Sende-Empfangseinheit oder in einem übergeordneten Auswerteeinheit als eine Art Landkarte bzw. Plan zur Zuordnung zu den Bereichen - meist 1. Cl. oder 2. Cl. - abgelegt. Aus Einfachheitsgründen kann es auch so ausgestaltet sein, dass nur der geometrisch kleinere Bereich mit solchen Funkbaken 110 ausgestattet ist, so dass beim Fehlen auf eine Kommunikation mit den Funkbaken 110 auf eine Anwesenheit im geometrisch grösseren Bereich - meist 2. Cl. - geschlossen werden kann. In einem Postprocessing in der Sende-/Empfangseinheit 20 oder in einem ausserhalb des Verkehrsmittels befindlichen Auswertesystems (vgl. [3)]) können die von einem e-Ticket 100 registrierten Kommunikationsvorgänge mit den Funkbaken der Identnummern 1, 3, 4, 5 und 9 einer Plausibilitätsprüfung unterzogen werden, um anhand allein der geometrischen Anordnung der Funkbaken die Registrierung der Funkbake mit der Identnummer 9 im vorliegenden Beispiel zu verwerfen.

Die Positionsermittlung über die Funkbaken 110 kann mehrmals pro durchfahrenem Streckenabschnitt stattfinden, um zu erkennen, ob der Fahrgast vielleicht die Klasse gewechselt hat (-> realistische Entgeltberechnung) bzw. zur Erkennung von Fehlern. Dies schliesst die im vorhergehenden Absatz erwähnte Beschränkung der Anordnung von Funkbaken 110 auf einen Bereich nicht aus.

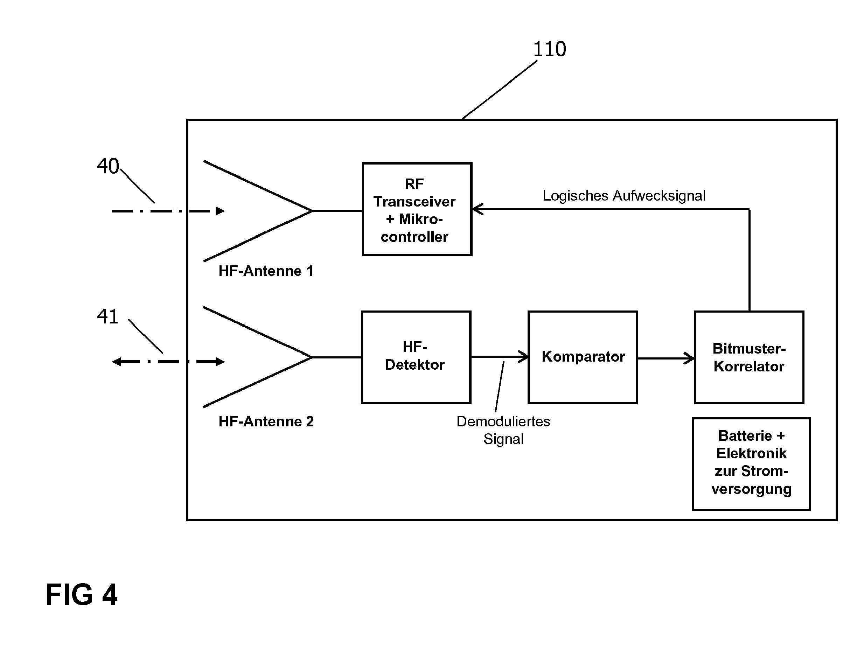

Figur 4 zeigt die schaltungsmässige und funktionale Struktur einer Funkbake 110 mit getrennten Frequenzbändern für Kommunikation 40 und Aufwecken 41.

Nachfolgend werden weitere Ausführungsformen der vorliegenden Erfindung mit den Funkbaken 110 erläutert: Die Funkbaken 110 werden energieautark betrieben werden, d. h. die zum Betrieb benötigte Energie wird aus ihrem Umfeld gewonnen.

Beispiel Versorgung über eine Solarzelle. Die Funkbake 110 ist so zu montieren, dass stets die Wagenbeleuchtung oder Licht von außen auf die in der Funkbake 110 eingebaute Solarzelle fällt. Zusätzlich kann die Funkbake 110 auch mit einem Energiespeicher, wie z. B. einem großen Kondensator ausgestattet sein, um pulsförmige Stromaufnahmen abzufangen.

Beispiel Nutzung der Temperaturdifferenz Die Temperaturdifferenz zwischen Wand der Wagen und der Luft im Wageninneren oder die entstehende Temperaturdifferenz im Sitzbereich wird benutzt, um die Funkbake 110 mit Energie zu versorgen.

Beispiel Rütteln Die während des Fahrbetriebes auftretende Erschütterungen werden durch ein Bauteil in Energie umgewandet.

Den oben genannten Ausführungsformen betreffend Energieversorgung weisen gemeinsam eine Batterie auf, die die Stromversorgung zu Zeiten übernimmt, in denen keine von außen zugeführte Energie zur Verfügung steht.

Die oben genannten Ausführungsformen betreffend Energieversorgung können frei kombiniert werden, so dass die Autonomie der Funkbaken 110 signifikant erhöht wird.

Vorteilhafterweise sind die Funkbaken 110 in standardmäßig gelieferten Bauteilen für die Innenausstattung der Wagen bereits funktionsfähig eingebaut. Beispiele:
- Verwendung von Sitzen 33 mit Einbauräumen in bzw. unterhalb der Sitzflächen;
- Abschlussleisten am oberen Ende der Sitzlehnen;
- Funkbaken 110 im Deckel oder im Korpus von an den Wänden angebrachten Abfallbehältern;
- Einbau von Funkbaken 110 an die bei den Sitzplätzen angeordneten kleinen Tischen;
- Beleuchtungseinrichtungen, in den bereits Funkbaken 110 installiert sind;
- Zwischenwände und Haltestangen mit integrierten Funkbaken 110.

Werden die Funkbaken 110 in der Nähe von Fenstern montiert, ist darauf zu achten, dass die Antennen dieser Funkbaken 110 ins Wageninnere des betreffenden Wagens 30 gerichtet sind.

Der Datenaustausch zwischen Funkbaken 110 und e-Ticket 100 kann zum Schutz vor Manipulationen verschlüsselt erfolgen; ggf. können auch einfache Methoden zur Verschlüsselung verwendet werden oder auch spezielle Bausteine zur Verschlüsselung bzw. Authentifizierung zum Einsatz kommen.

In einer besonderen Ausführungsform kann vorgesehen werden, dass die Funkbaken 110 nicht vom e-Ticket 110, sondern einem (z. B. an der Decke installierten) Lesegerät aufgeweckt werden.

Den Funkbaken 110 sind keine festen ID-Nummern zugewiesen, sondern die Funkbaken 110 erhalten ihre ID-Nummer dynamisch von einem der Nähe befindlichen Lesegerät per Funk zugewiesen bekommen. Dadurch ist ein zusätzlicher Schutz vor Manipulationen bzw. Sabotage gegeben).

Ausführung wie oben beschrieben, nur dass die Funkbaken 110 keine festen Bitmuster für den Aufweckvorgang besitzen, sondern diese dynamisch von in der Nähe befindlichen Schreib-Leseeinheiten 21 per Funk zugewiesen bekommen (zusätzlicher Schutz vor Manipulationen bzw. Sabotage).

Eine Ausführungsform kann zusätzlich beinhalten, dass für die Kommunikation zwischen Funkbake 110 und e-Ticket 100 und den Aufweckvorgang dasselbe Frequenzband bzw. dieselbe Frequenz genutzt wird.

Eine weitere Ausführungsform kann zusätzlich beinhalten, dass für die Kommunikation zwischen Funkbake 110 und e-Ticket 100 und den Aufweckvorgang unterschiedliche Frequenzbänder bzw. unterschiedliche Frequenzen genutzt werden.

Es kann vorgesehen sein, dass die Funkbaken 110 selbständig in regelmäßigen zeitlichen Abständen wiederholend ihre ID-Nummer und ggf. Prüfcodes senden, also nicht erst durch die e-Tickets 100 aufgeweckt werden müssen. Auf diese Art lässt sich der Energiebedarf der e-Tickets reduzieren.

Die e-Tickets 100 können eine «unscharfe Auswertung» vornehmen: Einzelne fehlerhafte Kommunikationswege zu weiter entfernten Funkbaken 110 führen aufgrund einer Auswertung der verschiedenen Kommunikationswege und der Empfangspegel zu keiner Fehlentscheidung.

Ausführung wie oben beschrieben, wobei die einzelnen Funkbaken 110 ständig die einzelnen Funkkanäle nach von e-Tickets 100 kommenden Telegrammen «abhorchen» und empfangene Telegramme anschließend per Funk an die Schreib-Leseeinheiten 21 im Wagen 30 melden. Hier ist also der Kommunikationsablauf im Vergleich zur oben vorgestellten Lösung ein anderer, dient aber genau demselben Zweck wie der oben beschriebene Kommunikationsablauf: Feststellen des Bereiches, in dem sich das e-Ticket 100 gerade befindet. Vorteile eines derart gestalteten Kommunikationsablaufs sind:
Das e-Ticket 100 hat zur Bereichsfeststellung keine zusätzlichen Abläufe durchzuführen, also wird auch keine zusätzliche Energie dafür benötigt. Und die Auslastung der Funkkanäle ist geringer, da die Funktelegramme für die Bereichsfeststellung entfallen (wenn z. B. die Datenübertragung von den Funkbaken ans Lesegerät oder eine übergeordnete Einheit drahtgebunden erfolgt). Möglicher Nachteil eines derart gestalteten Kommunikationsablaufs: Die Funkbaken 110 weisen eine entsprechend hohe Energieaufnahme auf, müssen gegebenenfalls mit größeren Batterien versehen werden oder an eine Stromversorgung im Wagen 30 angeschlossen werden.

In einigen Ländern gibt es GA's für Hunde. Diese GA's 2. Cl. berechtigen einen Hund auch zur Fahrt in 1. Cl. Die Fahrt muss jedoch unter der Aufsicht einer Person erfolgen, ein Hund hat allein kein Recht auf eine Transportleistung. Auch für den vorliegenden Fall leistet die Erfindung nützliche Dienste. In einem Protokoll-Element für die Erfassung könnte ein Feld Relationship folgender Struktur angegeben werden:
<card-id>, <origin-holder-id>, <slave-holder-id>. Das im e-Ticket 110 des Meisters eines Hundes enthaltene Protokollfeld *Relationship* stimmt in den ersten zwei Einträgen überein, jenes des Hunde-E-Tickets 110 im ersten und dritten Eintrag überein.

Dieses Protokollfeld ist nicht nur für Hunde anwendbar, sondern auch für transportkostenpflichtige sperrige oder schwere Güter. Beim Ausstellen eines Hunde-E-Tickets 110 oder eines Gepäcktickets kann gleich auch die Zuordnung vorgenommen, das Feld/record *Relationship* kann so oft iteriert vorkommen, als es Meister oder Nutzer dieses Hunde--e-Tickets 100 bzw. Gepäck-e-Tickets 100 hat.

### Liste der Bezugszeichen, Glossar

- 1, 2, .. , 12: Fortlaufende N° eines Funkbakens gemäss der Figur 2; Identnummer
- 100: e-Ticket, Position eines e-Tickets
- 110: Funkbake
- 110₁: Funkbake installiert an Wand
- 110₂: Funkbake installiert in Oberkante von Rückenlehne
- 110₃: Funkbake unterhalb der Sitzfläche eingebaut, z.B. für die Erfassung von Hunden
- 20, 20₁, 20₂: Sende-/Emfangseinheit
- 21₁, 21₂: Erfassungsbereich einer Sende-/Emfangseinheit 20₁.bzw. 20₂
- 30: Verkehrsmittel; Eisenbahnwagen, Schiff, Bus
- 31: Eingangsbereich
- 33: Sitz, Sitzplatz
- 34: Trennwand Eingangsbereich/Fahrgastraum mit Sitzen; Grenze zwischen zwei Bereichen des Verkehrsmittels; Übergangsbereich
- 40: Funksignal zur Datenkommunikation; Radiokommunikation
- 41: Funksignal für das Aufwecken eines e-Tickets; Radiokommunikation
- 43: Kommunikation zwischen Funkbake und e-Ticket zur Übermittlung einer Identnummer an das e-Ticket
- 1. Cl., 2. Cl.: Bezeichnung von Bereichen in einem Verkehrsmittel, 1. Klasse - Abteil, 2. Klasse Abteil
- GA: Generalabonnement
- HF: Hochfrequenz
- OeV,: ÖV Öffentlicher Verkehr
- PLL: Phase Locked Loop
- RF: Radiofrequenz
- RhB: Rhätische Bahn, www.rhb.ch
- RX: receiver, eigenständige Empfängerbausteine, die u.a. Informationen zum Empfangspegel liefern
- SBB: Schweizerische Bundesbahnen AG, www.sbb.ch
- SGV: Schifffahrtsgesellschaft des Vierwaldstättersees (SGV) AG, www.lakelucerne.ch
- TRX: transceiver, Kombination aus Sende- und Empfangsbaustein
- TX: transmitter, Sendebaustein
- UWB: Ultra Wide Band
- ZF: Zwischenfrequenz
- ZVV: Zürcher Verkehrsverbund, www.zvv.ch

### Liste der zitierten Dokumente

[1] EP 1 201 693 B1 «Verfahren und System zur Registrierung von Billetten»
[2] «E-Ticketing» Siemens Schweiz AG, Industry Sector, Mobility Division, Rail Automation **www.litra.ch/download.php?file=dcs/users/2/3 20110316 MF dt.pdf** und **http://www.litra.ch/dcs/users/2/3 20110316 MF dt.pdf**
[3] «Inhalt und Struktur der Spezifikationen/Kundenschnittstelle und Zertifizierung in der VDV-Kernapplikation» Präsentation von Dipl.-Ing. Elke Fischer VDV-KERNAPPLIKATIONS GmbH & Co. KG http://www.eticket-deutschland.de/

## Patentansprüche

1. Verfahren zur Registrierung einer definierten Anwesenheit von e-Tickets (100) in einem Verkehrsmittel (30), wobei die e-Tickets (100) Sende-/Empfangsmittel enthalten für eine Radiokommunikation (40, 41) mit einer im Verkehrsmittel (30) angeordneten Sende-/Empfangseinheit (20), bei welcher Radiokommunikation (40) Daten zur Registrierung der definierten Anwesenheit der e-Tickets (10) zur Sende-/Empfangseinheit (20) übermittelt werden;
**dadurch gekennzeichnet, dass**
- im Verkehrsmittel (30) eine eine Identnummer (1, 2, .., 12) enthaltende Funkbake (110, 110₁, 110₂, 110₃) installiert ist, deren relativer Ort innerhalb des Verkehrsmittels (30) in einem Speicher gespeichert ist;
- die Identnummer der Funkbake bei einer Kommunikation (43) zwischen e-Ticket (100) und Funkbake (110) an das e-Ticket (100) übermittelt wird;
- bei der Radiokommunikation (40, 41) zwischen dem e-Ticket (100) und der Sende-/Empfangseinheit (20) die Identnummer übermittelt wird und dass
- die Registrierung des relativen Orts des e-Tickets (100) bezüglich des Verkehrsmittels (30) mittels der Identnummer (1, 2, ..., 12) aus dem im Speicher gespeicherten relativen Ort vorgenommen wird.

2. Verfahren nach Anspruch 1,
**dadurch gekennzeichnet, dass**
die mit der Funkkommunikation (43) zwischen e-Ticket (100) und Funkbake (110) erzielbare Reichweite so gewählt wird, dass auf Basis von zustande kommenden Kommunikationsverbindungen eine Zuordnung des e-Tickets (100) zu einem relativen Ort vorgenommen werden kann.

3. Verfahren nach Anspruch 1 oder 2,
**dadurch gekennzeichnet, dass**
der den relativen Ort der Funkbake (110) enthaltende Speicher in der Sende-/Empfangseinheit (20) enthalten ist.

4. Verfahren nach Anspruch 1 oder 2,
**dadurch gekennzeichnet, dass**
der den relativen Ort der Funkbake (110) enthaltende Speicher in einem ausserhalb des Verkehrsmittel angeordneten Auswertesystem enthalten ist.

5. Verfahren nach einem der Ansprüche 1 bis 4,
**dadurch gekennzeichnet, dass**
die Registrierung des relativen Ortes eines e-Tickets (100) mittels einer Mehrzahl von im Verkehrsmittel (30) angeordneten Funkbaken (110) vorgenommen wird und dass aufgrund des gespeicherten relativen Orts einer jeden Funkbake (1, 2, ..., 11, 12) eine Plausibilitätsprüfung vorgenommen wird, bevor der relative Ort eines e-Tickets in einem Datensatz festgelegt wird.

6. Verfahren nach einem der Ansprüche 1 bis 5,
**dadurch gekennzeichnet, dass**
eine Plausibilitätsprüfung im e-Ticket (110) neben dem Zustandekommen von bestimmten Kommunikationswegen zwischen e-Ticket und verschiedenen Funkbaken auch aufgrund der Empfangspegel der Übermittlung von Identnummern (1, 2, ..., 12) zum e-Ticket vorgenommen wird.

7. Verfahren nach Anspruch 6,
**dadurch gekennzeichnet, dass**
mit sehr niedrigen Empfangspegeln erfasste Identnummern (1, 2, ..., 12) verworfen werden.

8. Verfahren nach einem der Ansprüche 1 bis 7,
**dadurch gekennzeichnet, dass**
die Funkbaken (110) autark betrieben werden.

9. Verfahren nach einem der Ansprüche 1 bis 8,
**dadurch gekennzeichnet, dass**
die Funkbaken (110) für Versorgung mit elektrischer Energie alternativ aufweisen:
- Solarzellen und ggf. einen Energiespeicher, wie z. B. einen Kondensator;
- Bauelement, das Erschütterung in elektrische Energie transformiert und ggf. einen Energiespeicher, wie z. B. einen Kondensator;
- Bauelement, das Temperaturdifferenzen in elektrische Energie transformiert und ggf. einen Energiespeicher, wie z. B. einen Kondensator.

10. Verfahren nach einem der Ansprüche 1 bis 9,
**dadurch gekennzeichnet, dass**
die Funkbaken (100) vorgängig der Übermittlung der Identnummer (1, 2, ..., 12) von einem e-Ticket (100) oder der Sende-/Empfangseinheit (20) mit einem Wecksignal in einen aktiven Zustand überführt werden.

11. Verfahren nach einem der Ansprüche 1 bis 9,
**dadurch gekennzeichnet, dass**
den Funkbaken (110) die Identnummer (1, 2, ..., 12) dynamisch zugewiesen werden kann.

12. Verfahren nach einem der Ansprüche 1 bis 11,
**dadurch gekennzeichnet, dass**
in einem ersten E-Ticket (100) ein Datenfeld (<relationship>) vorhanden ist, das eine Beziehung zum einem anderen e-Ticket (100) definiert, um den dem einen der beiden e-Tickets (100) registrierten relativen Ort auch dem anderen e-Ticket (100) zuweisen zu können.

13. System zur Registrierung einer definierten Anwesenheit von e-Tickets (100) in einem Verkehrsmittel (30), welche e-Tickets (100) Sende-/Empfangsmittel enthalten für eine Radiokommunikation (40, 41) mit einer im Verkehrsmittel (30) angeordneten Sende-/Empfangseinheit (20), bei welcher Radiokommunikation (41) Daten zur Registrierung der definierten Anwesenheit des e-Tickets (100)zur Sende-/Empfangseinheit (20) übermittelt werden;
**dadurch gekennzeichnet, dass**
- im Verkehrsmittel (30) eine eine Identnummer (1, 2, ..., 12) enthaltende Funkbake (110, 110₁, 110₂, 110₃) installiert ist, deren relativer Ort innerhalb des Verkehrsmittels (30) in einem Speicher gespeichert ist;
- die Identnummer der Funkbake (100) bei einer Kommunikation (43) zwischen e-Ticket (100) und Funkbake (110) an das e-Ticket (100) übermittelt wird;
- bei der Radiokommunikation (40, 41) zwischen dem e-Ticket (100) und der Sende-/Empfangseinheit (20) die Identnummer übermittelt wird und dass
- die Registrierung des relativen Orts des e-Tickets (100) bezüglich des Verkehrsmittels (30) mittels der Identnummer (1, 2, ..., 12) aus dem im Speicher gespeicherten relativen Ort vorgenommen wird.

14. System nach Anspruch 13,
**dadurch gekennzeichnet, dass**
die mit der Funkkommunikation (43) zwischen e-Ticket (100) und Funkbake (110) erzielbare Reichweite so gewählt wird, dass auf Basis von zustande kommenden Kommunikationsverbindungen eine Zuordnung des e-Tickets (100) zu einem relativen Ort vorgenommen werden kann.

15. System nach Anspruch 13 oder 14,
**dadurch gekennzeichnet, dass**
der den relativen Ort der Funkbake (110) enthaltende Speicher in der Sende-/Empfangseinheit (20) enthalten ist.

16. System nach Anspruch 13 oder 14,
**dadurch gekennzeichnet, dass**
der den relativen Ort des Funkbakens (110) enthaltende Speicher in einem ausserhalb des Verkehrsmittel (30) angeordneten Auswertesystems enthalten ist.

17. System nach einem der Ansprüche 13 bis 16,
**dadurch gekennzeichnet, dass**
die Funkbaken (110) für Versorgung mit elektrischer Energie alternativ aufweisen:
- Solarzellen und ggf. einen Energiespeicher, wie z. B. einen Kondensator;
- Bauelement, das Erschütterung in elektrische Energie transformiert und ggf. einen Energiespeicher, wie z. B. einen Kondensator;
- Bauelement, das Temperaturdifferenzen in elektrische Energie transformiert und ggf. einen Energiespeicher, wie z. B. einen Kondensator.
